# EUROPÄISCHE PATENTSCHRIFT

(11) **EP 2 342 136 B1**
(45) Veröffentlichungstag und Bekanntmachung des Hinweises auf die Patenterteilung: **30.03.2016**
(21) Anmeldenummer: 09751791.6
(22) Anmeldetag: 28.10.2009
(51) Int. Cl.: B65C 9/06, G01N 21/90

(54) **FLASCHENNAHT- UND EMBOSSINGAUSRICHTUNG**
BOTTLE SEAM AND EMBOSSING ALIGNMENT
DISPOSITIF D'ORIENTATION SUR LE JOINT DE MOULE OU LE BOSSAGE

(30) Priorität: 30.10.2008 DE 102008053876
(43) Veröffentlichungstag der Anmeldung: 13.07.2011
(73) Patentinhaber: KHS GmbH, 44143 Dortmund (DE)
(72) Erfinder: BUCHWALD, Carsten, 53498 Bad Breisig (DE); SCHORN, Wolfgang, 59506 Hönningen (DE)
(86) Internationale Anmeldenummer: PCT/EP2009/007705
(87) Internationale Veröffentlichungsnummer: WO 2010/049137

(56) Entgegenhaltungen:
- EP-A1- 0 491 555
- EP-A1- 1 628 241
- WO-A2-2008/050066
- DE-A1- 19 741 384
- DE-A1-102008 018 096
- DE-U1- 29 907 762
- US-A- 3 814 521

## Beschreibung

Die Erfindung betrifft ein Erfassungssystem zum Erfassen von Flaschen oder dergleichen Behältern, gemäß dem Oberbegriff des Anspruchs 1 und wie aus der EP 1 628 241 A1 bekannt.

Derartige Behälter können in der Art von Flaschen oder dergleichen für Flüssigkeiten, beispielsweise für Getränke verwendet werden. Die Behälter können aus einem transparenten, transluzenten oder opaken Material, beispielsweise aus Glas oder aus einem transluzenten Kunststoff, z.B. PET bestehen, und weisen eine glänzende Oberfläche auf. In den Behältern können Füllmedien unterschiedlichster Art eingefüllt sein, wobei die Behälter unterschiedliche Farben aufweisen können. Die Behälter werden zum Beispiel einer Etikettiermaschine zugeführt, in welcher ein Etikett in einer vorbestimmten und wiederholbaren Position stets gleich orientiert zu äußeren Positions- oder Gestaltungsmerkmalen bzw. Embossings auf der Außenseite des Behälters angeordnet werden soll. Das Etikett soll aber nicht nur korrekt zu Embossings oder anderen Merkmalen ausgerichtet sein, sondern möglichst auch faltenfrei bzw. ohne Erhebungen und/oder Vertiefungen auf dem Behälter angeordnet werden. Behälter können aber zwei vertikal verlaufende, einander direkt gegenüber angeordnete Flaschennähte oder auch nur eine Flaschennaht aufweisen. Insofern ist es durchaus gewünscht, dass das Etikett nicht auf eine der Flaschennähte bzw. auf der Flaschennaht bzw. Behälternaht aufgebracht wird, da dies die Optik des Etiketts bzw. des Behälters dahingehend stört, als das Etikett im Bereich der Ftaschennaht eine Falte (Erhebung/Vertiefung) aufweisen kann, so dass der Eindruck entsteht, das Etikett sei mit mangelnder Qualität auf den Behälter aufgebracht. Dies kann bei Endverbrauchern zu einem Meiden des Produkts führen.

Der Erfindung liegt daher die Aufgabe zugrunde, ein Erfassungssystem der Eingangs genannten Art anzugeben, welches mit einfachen Mitteln Merkmale auf dem Behälter erkennt, so dass das Etikett nicht auf eine Flaschennaht aufgebracht und/oder korrekt ausgerichtet zu Embossings auf dem Behälter angeordnet werden kann.

Erfindungsgemäß wird die Aufgabe durch ein Erfassungssystem mit den Merkmalen des Anspruchs 1 gelöst.

Die Beleuchtungseinheit ist so ausgeführt, dass vertikal ausgerichtete Lichtstrahlen auf den Behälterwandbereich projiziert werden.

In einer erfindungsgemäßen Ausgestaltung der Beleuchtungseinheit ist vorgesehen, dass diese ein Trägerelement mit einer zum Behälter orientierten Lichtfläche aufweist. An der Lichtfläche ist zumindest eine Leiterbahn angeordnet, an welcher zueinander beabstandet die Lichtquellen vertikal orientiert angeordnet sind. Die Leiterbahn ist bevorzugt flexibel, also biegbar ausgeführt und weist vertikal angeordnete Aufnahmestreifen für die Lichtquellen auf, so dass ein streifenförmiges Muster auf den Behälterwandbereich projiziert wird. Die Lichtquellen können beispielhaft als LED-Lichtquellen ausgeführt sein. Natürlich können die Lichtquellen auch als Infrarotlichtquelle ausgeführt sein. Bevorzugter weise sind die Lichtquellen gepulst, wobei die optische Anordnung bzw. die zumindest eine Kamera-mit der Lichtquelle synchronisiert wird.

Das Trägerelement bzw. die Lichtfläche ist in der Art eines Kreisausschnitts ausgeführt, welche den zu inspizierenden bzw. den zu erfassenden Behälter zumindest bereichsweise umfasst, aber axial zu diesem beabstandet ist. An der Lichtfläche kann in einer ersten Ausgestaltung eine einzige Leiterbahn mit daran angeordneten Lichtquellen angeordnet sein. Denkbar ist aber auch, mehrere Leiterbahnen, vorzugsweise zwei Leiterbahnen mit daran angeordneten Lichtquellen an der Lichtfläche anzuordnen, wobei die Leiterbahnen zweckmäßiger Weise übereinander angeordnet sind, und wobei die einzelnen Lichtquellenreihen bzw. -streifen vorteilhaft einen seitlichen Versatz zueinander aufweisen können.

Die optische Anordnung weist mehrere, bevorzugt drei Kameras auf, welche günstiger Weise korrelierend zu dem auf den Behälterwandbereich projizierten Streifenmuster so angeordnet sind, dass der gesamte von den Lichtquellen bestrahlte Behältervvandbereich aufnehmbar ist. In günstiger Ausführung ist zumindest ein Bereich von etwa 40% des Gesamtumfangs des Behälters von der optischen Anordnung aufnehmbar. Natürlich ist die optische Anordnung bezogen auf die Beleuchtungseinheit zweckmäßig höhenversetzt angeordnet.

Dass Erfassungssystem ist bevorzugt einer Etikettiermaschine zugeordnet, welche einen Etikettierstern aufweist. Insofern sind das Trägerelement und auch die optische Anordnung bei der Ausführung mit dem Etikettierstern von den baulichen Gegebenheiten des Etikettiersternes abhängig ausführbar. Dies bedeutet, dass nur ein bestimmter Behälterwandbereich von der Beleuchtungseinheit bestrahlt und von der optischen Anordnung aufnehmbar ist. Von daher ist es zweckmäßig im Sinne der Erfindung, wenn das Trägerelement beispielhaft als gebogener Blechstreifen so ausgeführt ist, dass dieser nicht in die kreisförmige Laufbahn des Behälters bzw. des Etikettiersternes eingreift. Natürlich kann das Trägerelement auch aus anderen geeigneten Materialien ausgeführt sein. An dem Trägerelement kann die Leiterbahn bzw. können die Leiterbahnen in geeigneter Weise ortsstabil befestigt, beispielsweise mit ihrer Rückseite verklebt werden, um nur eine beispielhafte Befestigungsart zu nennen.

In weiter günstiger Ausgestaltung kann vorgesehen sein, der zumindest einen Kamera, bevorzugt allen Kameras eine optische Linse, vorzugsweise in der Ausgestaltung als Zylinderlinse vorzulagern, um das auf den Behälterwandbereich projizierte Streifenmuster bzw. die vertikale Linienstruktur über den gesamten vertikalen Erfassungsbereich optisch zu spreizen. Die optische Linse kann auch als Fresnel-Linse ausgeführt sein, um nur ein weiteres geeignetes Beispiel für eine optische Linse zu nennen.

Mittels der vorteilhaft vorgesehenen optischen Linse kann eine höhere optische Auflösung des Erfassungssystems erreicht werden, da sich die Linienstruktur wesentlich feiner über den gesamten Erfassungsbereich des optischen Erfassungssystems ausbreitet. Dies gilt natürlich auch für den Fall des Versatzes der beiden Leiterbahnen bzw. der darauf angeordneten Lichtquellenreihen bzw. streifen.

Aufgrund der speziellen Anordnung der einzelnen Lichtquellen (Streifen bzw. Reihen) wird so ein gezieltes vertikales Streifenmuster auf den Behälterkörper bzw. auf den Behälterwandbereich projiziert. Die vorteilhafte Anordnung der Lichtquellen erzeugt in der "Total Reflexion" ein Abbild der gesamten Beleuchtungseinheit bzw. derer Lichtquellen in Streifen bzw. vertikal angeordneten Linien. Die Anordnung dieser Linien spiegelt somit die Oberfläche des zu erfassenden Behälters bzw. des Behälterwandbereiches. Sind an der Behälterwand bzw. an dem zu erfassenden Behälterwandbereich keine Veränderungen, wie zum Beispiel eine Flaschennaht angeordnet, sind die Linien unabhängig von Behälterrotationen oder Behälterpositionen in ihrer Anzahl zueinander immer gleich ausgerichtet. Fällt nun die Flaschennaht in diese Linienstruktur, ändert sich deren Anzahl und Anordnung zueinander. Es entsteht zum Beispiel eine Änderung der Linienabbildung. Mit der Erfindung kann so vorteilhaft unabhängig von Behälterinhalt und Behälterfarbe eine absolut exakte Position der Behälternaht bestimmt werden. Günstiger Weise können zwei Erfassungssysteme aufeinander folgend vorgesehen werden, so dass durch Rotation des Behälters um beispielsweise 90° eine exakte Positionsbestimmung der Behälternaht sichergestellt ist, dies auch deshalb, als das Erfassungssystem, insbesondere mit seinem Trägerelement wie zuvor beschrieben bei einem Etikettierstern nicht in diesen Eingreifen soll. Mit dem folgenden, zweiten Erfassungssystem kann durch ein Verdrehen des Behälters ein weiterer Behälterwandbereich inspiziert werden. Hierbei liegt der Erfindung die Tatsache zugrunde, dass der Behälter auf einem verdrehbaren Drehteller aufsteht, und bei dem Zuführen zu dem Erfassungssystem verdreht werden kann.

Um zu vermeiden, dass durch die Umgebung einfallende Reflexionen des Behälters eine Erkennungsgenauigkeit negativ beeinflusst, können die Lichtquellen als Infrarotlichtquelle ausgeführt sein, wobei auch ein Tageslichtsperrflter vorgesehen werden kann.

Mittels dem Erfassen bzw. der Positionsbestimmung der Behälternaht im Auflichtverfahren ist eine Ausrichtung des Behälters möglich, so dass ein Etikett an Stellen angebracht werden kann, an denen sich keine Behälternaht befindet, wodurch zum Beispiel Etikettenerhebungen (Falten) vermieden werden.

Das vorteilhaft ausgeführte Erfassungssystem kann im Sinne der Erfindung aber nicht nur zur Lagebestimmung der Behälternaht eingesetzt werden. Da die Beleuchtungseinheit aus einer Vielzahl von einzeln gezielten Lichtquellen gebildet ist, kann diese günstiger Weise auch zur Erkennung von äußeren Gestaltungsmerkmalen, so genannten Embossings eingesetzt werden. Auf eine optische Linse vor den jeweiligen Kameras kann dabei verzichtet werden, wobei die Beleuchtungseinheit als Dunkelfeld-Beleuchtung einsetzbar ist. Wie zuvor wird dabei ein streifenförmiges Lichtmuster auf den Behälter projiziert. Das Embossing erzeugt ebenfalls wie die Flaschennaht eine Veränderung auf der Behälteroberfläche. Über die "Total Reflexion" (Abbildung) wird die Struktur und die Form des Embossings wieder gespiegelt. Diese Strukturen können je nach Drehposition des Behälters für das (optische) Erfassungssystem eingelernt werden. Vorteilhaft ist das Erfassungssystem so in der Lage, unabhängig von Inhalt und Behälterfarbe eine absolut exakte Position des Embossings zu bestimmen. Bei einer glatten Oberfläche, also eine Oberfläche ohne Embossing, entstehen keine Glanzpunkte des auf den Behälter projizierten Streifenmusters. Die Oberfläche erscheint für das (optische) Erfassungssystem schwarz. Fällt das auf den Behälter projizierte Streifenmuster dagegen auf das Embossing, bzw. auf die Erhebungen, entstehen diese Glanzpunkte, welche von der optischen Anordnung bzw. von den Kameras als (weiße) Lichtpunkte aufgenommen werden. Zwischen den Glanzpunkten erscheint die glatte Behälteroberfläche schwarz, so dass das gesamte Embossing mittels der Glanzpunkte von der Kameraanordnung erkennbar ist. Mittels der Erkennung des Embossings ist eine Ausrichtung zum Korrekten, also ausgerichteten Aufbringen des Etikettes in Relation zu dem Embossing möglich.

In weiter günstiger Ausgestaltung ist das Trägerelement der Beleuchtungseinheit als Abschlussplatte ausgeführt, wobei zwei zueinander vertikal beabstandete Abschlussplatten vorgesehen sind. Zwischen den einander vertikal beabstandeten Abschlussplatten sind Lichtleiter in der bevorzugten Ausgestaltung als farblose (glasklare) Plexiglasstäbe angeordnet. Günstiger Weise sind eine Vielzahl von Lichtleitern direkt nebeneinander liegend vorgesehen. Den Lichtleitern ist an ihrer Tragseite gegenüberliegend zur Lichtfläche jeweils eine Lichtquelle zugeordnet, welche möglichst nah, bevorzugt ohne Abstand an der Tragseite angeordnet ist. Dies hat den Vorteil, dass die Lichtquellen bezogen auf eine Anordnung auf einer Leiterbahn flexibler angeordnet werden können; Denn auf der Leiterplatte ist deren Position durch die fixe Anordnung der Aufnahmestreifen statisch vorgegeben. Im Gegensatz dazu weisen die Lichtleiter eine plane Rückseite bzw. Tragseite und eine dazu gegenüberliegende Lichtfläche auf, welche in einem frei wählbaren Radius abgearbeitet, beispielsweise abgefräst werden kann, so dass lichtflächenseitig wiederum eine kreisausschnittsartige Beleuchtungseinheit gebildet ist. Selbstverständlich können die an der Lichtfläche angeordneten Stirnseiten der Abschlussplatten entsprechend mit bearbeitet werden. Dies hat den Vorteil, dass der Lichtgeber, also die aneinander gereihten Lichtleiter nicht mehr gekrümmt sein muss, sondern entsprechend bearbeitet werden kann. Die gekrümmte Lichtfläche ist so homogen beleuchtet.

Um ein Streifenmuster auf die Behälteroberfläche zu projizieren, ist daher vorteilhaft vorgesehen, die Lichtfläche mit einer Maske zu versehen, welche vertikale Lichtaustrittsöffnungen, also vertikale Lichtstreifen (Schlitze) aufweist. Natürlich können unterschiedliche Masken mit unterschiedlichen Schlitz- bzw. Lichtmustern auf der Lichtfläche angeordnet werden. Mittels der jeweiligen Maske kann so ein beliebiges Muster auf den Behälter bzw. auf den Behälterwandbereich projiziert werden. Die Maske kann in zweckmäßiger Ausführung als ein an die Krümmung der Lichtfläche angepasstes Blendelement in der bevorzugten Ausführung als Blendblech mit Schlitzen in vorgebbaren Breiten und vorgebbaren Abständen ausgeführt sein. Natürlich kann die Maske aber auch ein flexibles Element sein, in welchem die Schlitze eingebracht sind, um die Maske unabhängig von dem Radius der Lichtfläche einsetzen zu können. Die Maske kann abhängig von dem Behälterdurchmesser, und/oder der Auflösung der Kamera ausgeführt sein. Möglich ist natürlich die Lichtleiter so zu dimensionieren, dass mehrere Masken auf der Lichtfläche übereinander liegend angeordnet werden können, wobei die jeweiligen Schlitze der übereinander angeordneten Masken dann zumindest einen seitlichen Versatz zueinander aufweisen können. Denkbar ist aber auch die Beleuchtungseinheit kaskadiert auszuführen, also mehrere Beleuchtungseinheiten übereinander angeordnet vorzusehen, wobei jede Beleuchtungseinheit an ihrer Lichtfläche eine jeweils andere Maske aufweisen könnte. Möglich ist auch, mehrere Lichtleiter übereinander und nebeneinander angeordnet zwischen den Abschlussplatten vorzusehen.

Auch mit dieser vorteilhaften Weiterbildung der Beleuchtungseinheit werden einzelne Lichtquellen, also der jeweils aus den Schlitzen der Maske austretende Lichtstreifen als "Total Reflexion" bzw. Abbildung auf den Behälter projizierbar, wobei allerdings der Aufwand zur Herstellung der Leiterbahnen entfallen könnte. Durch die jeweils individuell herstellbare Maske wird zudem eine größere Flexibilität erreicht. Vorteilhaft wurde gefunden, dass die so hergestellte Beleuchtungseinheit bei einem Verzicht auf die Maske an ihrer Lichtfläche auch als Auflicht-Hellfeldbeleuchtung eingesetzt werden kann.

In einer vorteilhaften Ausgestaltung können die Lichtleiter als Vierkantstäbe ausgeführt sein, deren Seitenflächen jeweils plan ausgeführt sind, wobei die jeweils benachbarten Lichtleiter ohne Abstand mit ihren Seitenflächen aneinander liegend angeordnet sind.

Weitere vorteilhafte Ausgestaltungen der Erfindung sind in den Unteransprüchen und der folgenden Figurenbeschreibung offenbart. Es zeigen
- Fig.1: einen prinzipiellen Aufbau eines Erfassungssystems,
- Fig. 2: eine Leiterbahn als Einzelheit,
- Fig. 3: zwei übereinander angeordnete Leiterbahnen mit Versatz der Lichtstreifen,
- Fig. 4: eine Beleuchtungseinheit in vorteilhafter Weiterbildung in einer Aufsicht,
- Fig. 5: eine Lichteinkopplung in einen Lichtleiter der Beleuchtungseinheit nach Figur 4,
- Fig. 6: einen kaskadierten Aufbau mehrere Beleuchtungseinheiten gemäß Figur 4,
- Fig. 7: eine inverse Darstellung eines Lichtmusters auf einer Behälterwand, und
- Fig. 8: eine inverse Darstellung eines Embossings.

In den unterschiedlichen Figuren sind gleiche Teile stets mit denselben Bezugszeichen versehen, weswegen diese in der Regel auch nur einmal beschrieben werden.

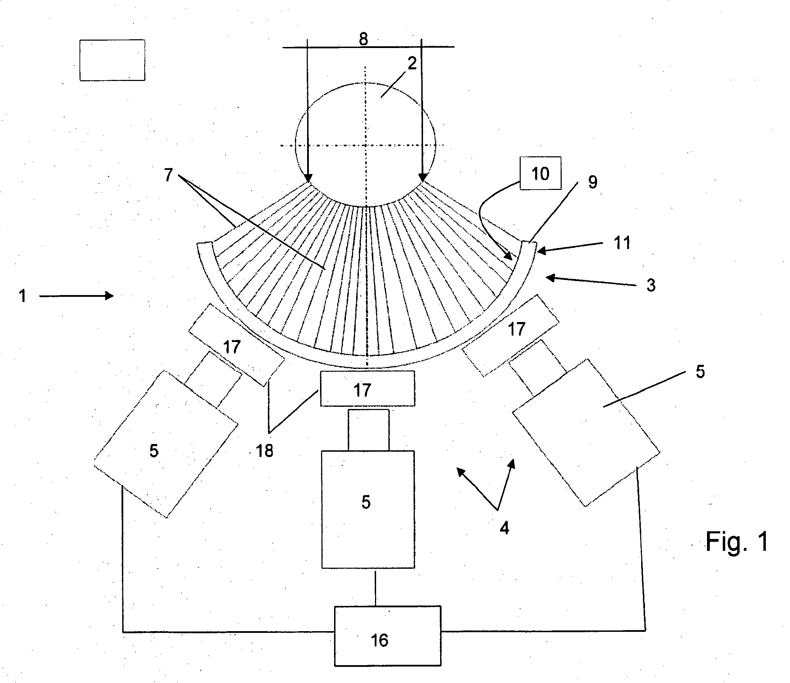

Figur 1 zeigt ein Erfassungssystem 1 zum Erfassen von Flaschen 2 oder dergleichen Behältern. Die beispielhaften Flaschen 2 können an ihrer Behälterwand angeordnete Merkmale wie zum Beispiel Flaschennähte und/oder Gestaltungsmerkmale, so genannte Embossings aufweisen. Das Erfassungssystem 1 weist eine Beleuchtungseinheit 3 und eine optische Anordnung 4 mit zumindest einer Kamera 5 auf.

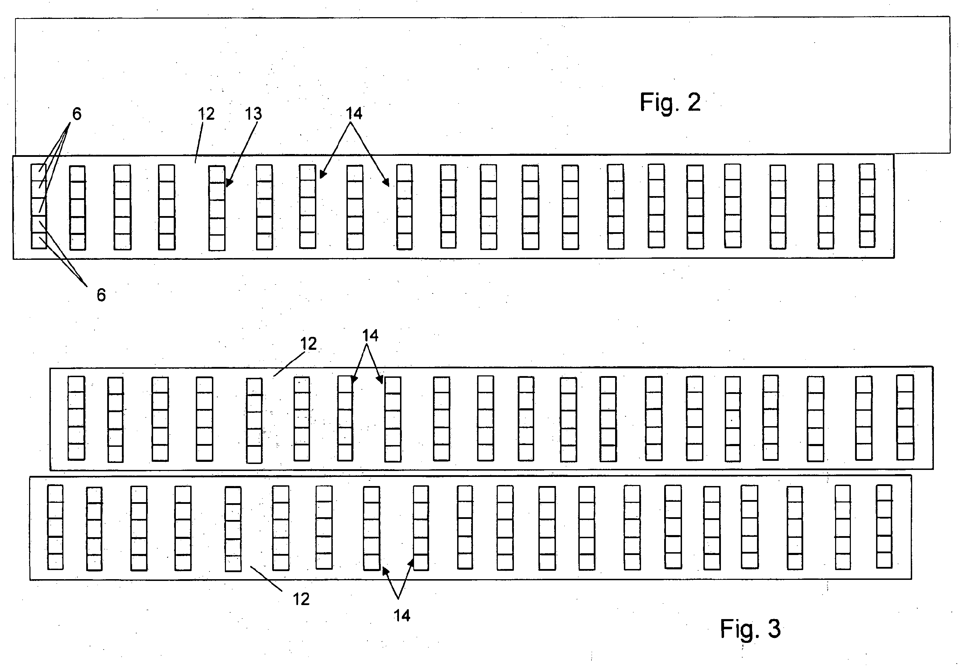

Die Beleuchtungseinheit 3 weist eine Vielzahl von Lichtquellen 6 (Figur 2) auf, und ist so ausgeführt, dass von der jeweiligen Lichtquelle 6 ein streifenförmiger Lichtstrahl 7 auf einen Behälterwandbereich 8 projiziert wird, wobei die jeweils streifenförmigen, auf den Behälterwandbereich 8 projizierten Lichtstrahlen 7 zueinander beabstandet sind.

Die Behälter bzw. Flaschen 2 können aus einem transparenten, transluzenten oder opaken Material bestehen, und weisen eine glänzende Oberfläche auf. Die Flasche 2 kann jeweils unterschiedliche Farben aufweisen und mit jeweils unterschiedlichen Füllmedien gefüllt sein.

Bei dem in Figur 1 dargestellten Ausführungsbeispiel weist die Beleuchtungseinheit 3 ein Trägerelement 9 mit einer zum Behälter 2 orientierten Lichtfläche 10 und einer dazu gegenüberliegenden Rückseite 11 auf. Das Trägerelement 9 ist beispielhaft als kreisausschnittartiger Blechstreifen ausgeführt. Natürlich können auch andere geeignete Materialien zur Ausgestaltung des Trägerelementes 9 eingesetzt werden.

An der Lichtfläche 10 ist zumindest eine Leiterbahn 12 (Figur 2) angeordnet. Die Leiterbahn 12 ist als flexible Leiterbahn ausgeführt und weist vertikal angeordnete Aufnahmestreifen 13 auf, die in einer Längsrichtung der Leiterbahn 12 gesehen zueinander beabstandet sind. An den Aufnahmestreifen 13 können die Lichtquellen 6 angeordnet werden. Mit ihrer Rückseite ist die Leiterbahn 12 mit der Lichtfläche des Trägerelementes 9 verbindbar.

Mit der Leiterbahn 12, bzw. mit den darauf in vertikalen Reihen 14 bzw. Linien angeordneten Lichtquellen 6 wird ein streifenförmiges Lichtmuster 15 auf den Behälterwandbereich 8 projiziert.

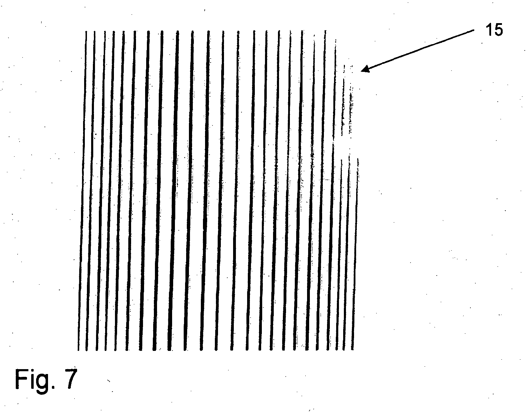

Ein beispielhaft streifenförmiges Lichtmuster 15, welches auf einen bevorzugt zylindrisch ausgeführten Behälterwandbereich 8 projiziert wird, ist in Figur 7 in inverser Darstellung gezeigt. Dies bedeutet, dass die Lichtstrahlen 7, bzw. das streifenförmige Lichtmuster 15 in inverser Darstellung schwarz bzw. dunkel dargestellt ist, wobei die nicht angestrahlte Behälterwand in inverser Darstellung weiß bzw. hell erscheint.

An dem Trägerelement 9 können aber auch mehrere Leiterbahnen 12 angeordnet werden, wie beispielhaft in Figur 3 gezeigt. Hierbei sind die Leiterbahnen 12 mit ihren vertikal angeordneten Reihen 14 seitlich versetzt zueinander angeordnet.

Der Behälter 2 nach dem Ausführungsbeispiel gemäß Figur 1 wird in einem Etikettierstern einer Etikettiermaschine an den Erfassungssystem 1 vorbeitransportiert. Von daher ist das Trägerelement 9 vorteilhaft so ausgeführt, dass dieses nicht in den Transportweg (Kreisbahn) des Behälters 2 eingreift. Mit der Beleuchtungseinheit 3 kann so ein streifenförmiges Lichtmuster 15 auf einen Behälterwandbereich 8 projiziert werden, der etwa 40% des Gesamtumfangs des Behälters 2 entspricht.

Die optische Anordnung 4 (Figur 1) weist wie beispielhaft dargestellt drei Kameras 5 auf. Die Kameras 5 sind bezogen auf die Beleuchtungseinheit 3 höhenversetzt angeordnet. Dies bedeutet, dass die optische Anordnung 4 oberhalb oder unterhalb der Beleuchtungseinheit 3 angeordnet sein kann. Die optische Anordnung 4 ist so angeordnet, dass der mit dem streifenförmigen Lichtmuster 15 ausgeleuchtete Behälterwandbereich 8 aufnehmbar ist. Die optische Anordnung 4, also jede Kamera 5 ist mit einer Auswerte- und Steuereinheit 16 verbunden, in welcher die von der jeweiligen Kamera 5 gelieferten Bilder oder Bilddaten ausgewertet werden. Die Verarbeitung der von der Kamera 5 gelieferten Bilder oder Bilddaten erfolgt beispielsweise durch Vergleich mit in der Auswerte- und Steuereinheit 16 abgespeicherten Solldaten. Insofern kann die Auswerte- und Steuereinheit 16 auch als Bildverarbeitungs- und Steuereinheit 16 bezeichnet werden. Die Auswerte-und Steuereinheit 16 ist beispielsweise ein Rechner oder eine rechnergestützte Einheit mit entsprechenden Eingängen für analoge oder digitale von der jeweiligen Kamera gelieferten Daten. Weiter weist die Auswerte- und Steuereinheit 16 nicht dargestellte Ausgänge auf, welche mit den einzelnen Komponenten (z.B. Behälterausrichtung, Etikettieraggregat) der Etikettiermaschine verbunden sind.

Jeder Kamera 5 ist beispielhaft eine optische Linse 17 zugeordnet. In dem dargestellten Ausführungsbeispiel nach Figur 1 ist die jeweilige optische Linse 17 als Zylinderlinse ausgeführt, welche mit ihren Stirnflächen 18 senkrecht zur Optik der jeweiligen Kamera 5 angeordnet ist. Die optische Linse 17 kann auch als Fresnel-Linse ausgeführt sein, um nur ein weiteres Beispiel zu nennen.

Aufgrund der speziellen Anordnung der einzelnen Lichtquellen 6 (Streifen bzw. Reihen 14) wird so ein gezieltes vertikales Streifenmuster 15 auf den Behälterkörper bzw. auf den Behälterwandbereich 8 projiziert. Die vorteilhafte Anordnung der Lichtquellen 6 erzeugt in der "Total Reflexion" ein Abbild der gesamten Beleuchtungseinheit 3 bzw. derer Lichtquellen 6 in Streifen bzw. vertikal angeordneten Reihen 14. Die Anordnung dieser Reihen 14 spiegelt somit die Oberfläche des zu erfassenden Behälters bzw. des Behälterwandbereiches 8. Sind an der Behälterwand bzw. an dem zu erfassenden Behälterwandbereich 8 keine Veränderungen, wie zum Beispiel eine Flaschennaht angeordnet, sind die Reihen 14 bzw. die Linien des vertikalen Streifenmusters 15 (Figur 7) unabhängig von Behälterrotationen oder Behälterpositionen in ihrer Anzahl zueinander immer gleich ausgerichtet. Würde nun die Flaschennaht in diese Linienstruktur (streifenförmiges Lichtmuster 15) einfallen, ändert sich Anzahl und Anordnung der Reihen 14 zueinander. Es entsteht zum Beispiel eine Änderung der Linienabbildung. Mit der Erfindung kann so vorteilhaft unabhängig von Behälterinhalt und Behälterfarbe eine absolut exakte Position der Behälternaht bzw. der Flaschennaht bestimmt werden.

Günstiger Weise können zwei Erfassungssysteme 1 aufeinander folgend vorgesehen werden, so dass durch Rotation des Behälters um beispielsweise 90° eine exakte Positionsbestimmung der Behälternaht sichergestellt ist, dies auch deshalb, als das Erfassungssystem 1, insbesondere mit seinem Trägerelement 9 wie zuvor beschrieben bei einem Etikettierstern nicht in diesen Eingreifen soll. Mit dem folgenden, zweiten Erfassungssystem kann durch ein Verdrehen des Behälters 2 ein weiterer Behälterwandbereich 8 inspiziert werden. Hierbei liegt der Erfindung die Tatsache zugrunde, dass der Behälter auf einem verdrehbaren Drehteller aufsteht, und bei dem Zuführen zu dem Erfassungssystem 1 verdreht werden kann.

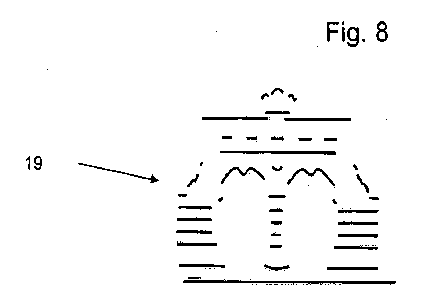

Wie Figur 8 entnehmbar ist, kann das Erfassungssystem 1 auch zum Erkenn von äußeren Gestaltungsmerkmalen, so genannten Embössings 19 eingesetzt werden, da die Beleuchtungseinheit 3 aus einer Vielzahl von einzeln gezielt angeordneten Lichtquellen 6 gebildet ist. Auch Figur 8 ist eine inverse Darstellung des von den Kameras 5 aufgenommenen Bildes. Auf eine optische Linse vor den jeweiligen Kameras 5 kann dabei verzichtet werden, wobei die Beleuchtungseinheit 2 als Dunkelfeld-Beleuchtung einsetzbar ist. Wie zuvor wird dabei ein streifenförmiges Lichtmuster 15 auf den Behälter projiziert. Das Embossing 19 erzeugt ebenfalls wie die Flaschennaht eine Veränderung auf der Behälteroberfläche. Über die "Total Reflexion" (Abbildung) wird die Struktur und die Form des Embossings 19 wieder gespiegelt. Diese Strukturen können je nach Drehposition des Behälters 2 für das (optische) Erfassungssystem 1 eingelernt werden. Vorteilhaft ist das Erfassungssystem 1 so in der Lage, unabhängig von Inhalt und Behälterfarbe eine absolut exakte Position des Embossings 19 zu bestimmen. Bei einer glatten Oberfläche, also eine Oberfläche ohne Embossing, entstehen keine Glanzpunkte des auf den Behälter projizierten Streifenmusters 15. Die Oberfläche erscheint für das (optische) Erfassungssystem 1 schwarz bzw. dunkel (invers weiß bzw. hell). Fällt das auf den Behälter 2 projizierte Streifenmuster 15 dagegen auf das Embossing 19, bzw. auf die Erhebungen, entstehen diese Glanzpunkte, welche von der optischen Anordnung bzw. von den Kameras als (weiße bzw. helle) Lichtpunkte (invers schwarze bzw. dunkle Lichtpunkte) aufgenommen werden. Zwischen den Glanzpunkten erscheint die glatte Behälteroberfläche schwarz bzw. dunkel (invers weiß bzw. hell), so dass das gesamte Embossing 19 mittels der Glanzpunkte von der optischen Anordnung 4 erkennbar ist. Mittels der Erkennung des Embossings 19 ist eine Ausrichtung zum Korrekten, also ausgerichteten Aufbringen des Etikettes in Relation zu dem Embossing 19 möglich.

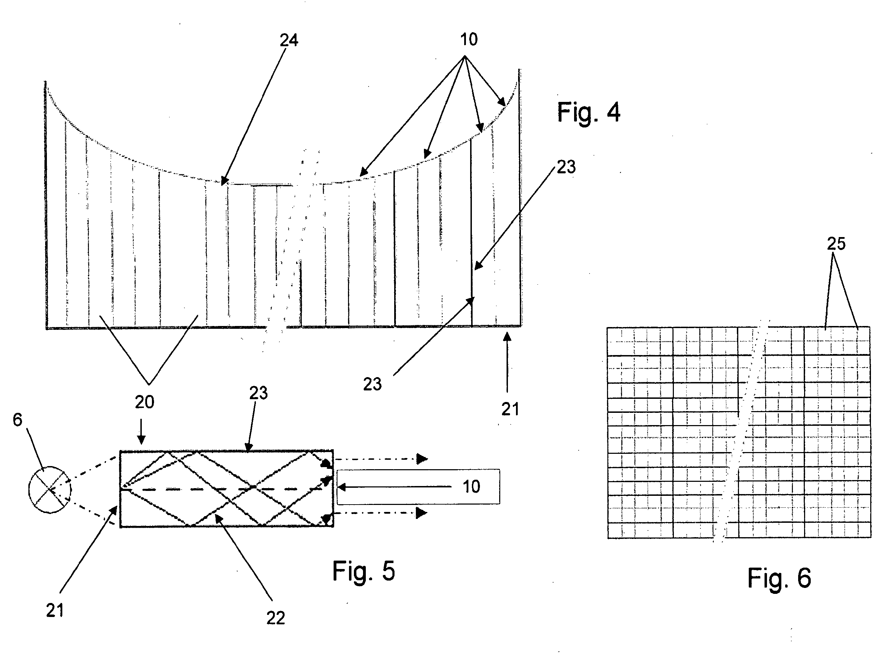

Bei dem in Figur 4 dargestellten Ausführungsbeispiel ist die Beleuchtungseinheit 3 aus einer Vielzahl von Lichtleitern 20 gebildet, die jeweils an ihrer Rückseite 21 bzw. Tragseite 21 eine Lichtquelle 6 aufweisen. Die Rückseite 21 ist gegenüberliegend zur Lichtfläche 10 der Beleuchtungseinheit 3 angeordnet.

In Figur 5 ist ein Lichtleiter 20 als Einzelheit gezeigt. Entgegen der in Figur 5 dargestellten Anordnung der jeweiligen Lichtquelle 6 zu dem jeweiligen Lichtleiter 20 weist die Lichtquelle 6 bevorzugt einen geringen, weiter bevorzugt gar keinen Abstand zur Rückseite 21 auf. Rückseitig wird das aus der Lichtquelle 6 emittierte Licht in den Lichtleiter 20 eingekoppelt, und tritt lichtflächenseitig aus dem Lichtleiter 20 aus. Dies ist mittels des beispielhaften Strahlenganges 22 gezeigt.

Der jeweilige Lichtleiter 20 ist bevorzugt als farbloser (glasklarer) Plexiglasstab in der Form eines Vierkantstabes ausgeführt. Mit jeweils benachbarten Seitenflächen 23 liegen die Lichtleiter 20 ohne Spalt aneinander.

Die Lichtleiter 20 sind zwischen zwei nicht dargestellten, vertikal beabstandeten Abschlussplatten gehalten.

Gemäß dem Ausführungsbeispiel nach Figur 4 wird die jeweilige Lichtfläche 10 des jeweiligen Lichtleiters 20 so bearbeitet, dass die gesamte Lichtfläche 10, als die aus den einzelnen Lichtleitern 20 gebildete Lichtfläche 10 einen jeweils angepassten Radius 24 aufweist, so dass eine mit einer kreisausschnittsartigen Lichtfläche 10 ausgeführte Beleuchtungseinheit 3 gebildet ist. In bevorzugter Ausführung werden die einzelnen Lichtleiter 20 dabei in der gewünschten Anzahl nebeneinander angeordnet zwischen den Abschlussplatten gelegt, wobei dann die gesamte Lichtfläche 10 mit dem gewünschten Radius 24 hergestellt wird. Der Radius 24 kann so ausgeführt sein, dass die Beleuchtungseinheit 3 nicht in die Laufbahn (Etikettierstern) eingreift.

Durch diese vorteilhafte Ausführung wird eine homogen beleuchtete Lichtfläche 10 gebildet. Um das streifenartige Lichtmuster 15 auf den Behälterwandbereich 8 projizieren zu können, ist vorteilhaft vorgesehen, die homogen beleuchtete Lichtfläche 10 mit einer Maske abzudecken. Die Maske ist nicht dargestellt, kann aber vertikal verlaufende Schlitze in vorgebbaren Breiten und Abständen aufweisen. Die Maske kann aus einem Blendblech gebildet sein, welches an den Radius 24 angepasst ist.

Wie der beispielhaften Skizze gemäß Figur 6 entnehmbar ist, können mehrere Beleuchtungseiriheiten 3 kaskadiert vorgesehen werden, wobei jede Beleuchtungseinheit 3 an ihrer Lichtfläche 10 eine jeweils unterschiedliche Maske aufweisen kann. Die einzelnen in Figur 6 klein dargestellten Quadrate 25 stellen dabei jeweils einen Lichtleiter 20 dar. Wie beispielhaft dargestellt kann eine Vielzahl von Lichtleitern 20 übereinander und nebeneinander angeordnet sein.

### Bezugszeichenliste

- 1: Erfassungssystem
- 2: Behälter/Flasche
- 3: Beleuchtungseinheit
- 4: Optische Anordnung
- 5: Kamera
- 6: Lichtquelle
- 7: Lichtstrahlen
- 8: Behälterwandbereich
- 9: Trägerelement
- 10: Lichtfläche
- 11: Rückseite von 9
- 12: Leiterbahn
- 13: Aufnahmestreifen
- 14: Vertikale Reihen bzw. Linien
- 15: Vertikales Lichtmuster
- 16: Auswerte- und Steuereinheit
- 17: Optische Linse
- 18: Stirnflächen von 17
- 19: Embossing
- 20: Lichtleiter
- 21: Rückseite von 20
- 22: Strahlengang
- 23: Seitenflächen von 20
- 24: Radius
- 25: Quadrate

## Patentansprüche

1. Erfassungssystem zum Erfassen von Flaschen (2) und dergleichen Behälter (2), welcher an einer Behälterwand angeordnete Merkmale aufweisen, wobei das Erfassungssystem (1), an welchem die Behälter (2) auf einem Drehteller aufstehend verdrehbar vorbeltransportiert werden, elBeleuchtungseinheit (3), die ein Trägerelement (9) mit einer zum Behälter (2) orientierten kreisausschnittsartigen Lichtfläche (10) aufweiset, welche den Behälter bereichsweise umfasst aber axial zu diesem beabstandet ist, und eine optische Anordnung (4) mit zumindest einer Kamera (5) aufweist, **dadurch gekennzeichnet, dass** die Beleuchtungseinheit (3) an ihrer Lichtfläche (10) zumindest eine Leiterbahn (12) aufweist, an welcher Lichtquellen (6) vertikal und in vertikal ausgerichteten Reihen (14) angeordnet sind, welche zu einander beabstandet sind, so dass von der Beleuchtungseinheit (3) ein streifenförmiges, vertikal ausgerichtetes Lichtmuster (15) mit mehreren, zueinander beabstandeten, vertikal ausgerichteten Lichtstrahlen- bzw. streifen (7) auf einen Behalterwandbereich (8) projizierbar Ist, wobei der mit dem streifenförmigen Lichtmuster (15) bestrahlte Behälterwandbereich (8) etwa 40% des Gesamtumfangs des Behälters (2) entspricht welcher Behälterwandbereich (8) von der optischen Anordnung (4) mit mehreren Kameras (5) aufnehmbar ist, wobei die Kameras (5) höhenversetzt zu der Beleuchtungseinheit (3) angeordnet sind.

2. Erfassungssystem nach Anspruch 1, **dadurch gekennzeichnet, dass** der zumindest einen Kamera (5) eine optische Linse (17) zugeordnet ist.

3. Erfassungssystem nach einem der vorhergehenden Ansprüche, **dadurch gekennzeichnet, dass** die Beleuchtungseinheit (3) aus einer Vielzahl von nebeneinander angeordneten Lichtleitem (20) gebildet ist, denen jeweils eine Lichtquelle (6) rückseitig zugeordnet, ist, wobei die Lichtfläche (10) in einem Radius (24) ausgeführt ist,

4. Erfassungssystem nach einem der vorhergehenden Ansprüche 1,2 **dadurch gekennzeichnet, dass** die Beleuchtungseinheit (3) aus einer Vielzahl von nebeneinander angeordneten Lichtleitern (20) gebildet ist, denen jeweils eine Lichtquelle (6) rückseitig zugeordnet ist, wobei an der Lichtfläche (10) eine Maske mit vertikal ausgeführten Lichtaustrittsöffnungen angeordnet ist.

5. Erfassungssystem nach Anspruch 4, **dadurch gekennzeichnet, dass** die Maske als Blendelement mit vorgebbaren Schlitzbreiten und Schlitzabständen ausgeführt ist.

6. Erfassungssystem nach einem der Ansprüche 3 bis 5, **dadurch gekennzeichnet, dass** die Lichtleiter (20) als farblose, glasklare Plexiglasstäbe in der Ausgestaltung als Vierkantstäbe ausgeführt sind, die mit ihren jeweiligen benachbarten Seitenflächen (23) plan aneinander liegen.

7. Verwendung eines Erfassungssystems (1) nach einem der vorhergehenden Ansprüche zum Erkennen von Behaiternahten und/oder Embossings.

8. Verwendung eines Erfassungssystems (1) nach einem der vorhergehenden Ansprüche in einer Etikettiermaschine.

## Claims

1. Registration system ,for registering bottles (2) and similar containers (2), which comprise features arranged on a container wall, wherein the registration system (1), past which the containers (2) are conveyed standing upright on a rotating plate, such as to be capable of rotation, comprises a lighting unit (3), which comprises a carrier element (9) with a light surface (10) in the form of a circle section oriented towards the container (2), which surrounds the container in sections but which is spaced axially at a distance from it, and an optical assembly (4) with at least one camera (5), **characterized in that** the lighting unit (3) comprises on its lighting surface (10) at least one fibre optic (12), at which light sources (6) are arranged vertically and in vertically aligned rows (14), which are spaced at a distance from one another, such that, from or by the lighting unit (3), a stripe-shaped vertically aligned light pattern with a plurality of vertically aligned light beams or strips (7) can be projected onto a container wall area (8), wherein the container wall area (8) illuminated with the stripe-shaped light pattern (15) corresponds to some 40% of the total circumference of the container (2), and wherein the said container wall area (8) can be appraised by the optical assembly (4) with a plurality of cameras (5), wherein the cameras (5) are arranged height-offset in relation to the lighting unit (3).

2. Registration system according to claim 1, **characterised in that** an optical lens is allocated to the at least one camera (5).

3. Registration system according to any one of the preceding claims, **characterised in that** the lighting unit (3) is formed from a plurality of fibre optics (20) arranged next to one another, to each of which a light source (8) is allocated on the rear side, wherein the light surface (10) is arranged in a radius (24).

4. Registration system according to any one of the preceding claims 1, 2, **characterised in that** the lighting unit (3) is formed from a plurality of fibre optics (20) arranged next to one another, to each of which a light source (6) is arranged on the rear side, wherein a mask with vertically arranged light emergence openings is arranged at the light surface (10).

5. Registration system according to claim 4, **characterised in that** the mask is arranged as a diaphragm element with slit widths and slit spacing intervals which can be predetermined.

6. Registration system according to any one of claims 3 to 5, **characterised in that** the fibre optics (20) are arranged as colourless, glass-clear plexiglas (Perspex) rods in the embodiment as square rods, which are in flat contact with one another with their respective adjacent side surfaces (23).

7. Use of a registration system (1) according to any one of the preceding claims for the recognition of container seams and/or embossings.

8. Use of a registration system (1) according to any one of the preceding claims in a labelling machine.

## Revendications

1. Système de détection pour la détection de bouteilles (2) et de récipients similaires (2) qui présentent des caractéristiques agencées sur une paroi de récipient, le système de détection (1), devant lequel les récipients (2) sont transportés debout sur un plateau tournant de manière à pouvoir tourner, présentant une unité d'éclairage (3) qui présentent un élément porteur (9) avec une surface lumineuse (10) de type secteur circulaire, orientée par rapport au récipient (2), qui comportent par endroits le récipient mais est espacée axialement par rapport à celui-ci, et un agencement optique (4) avec au moins une caméra (5), **caractérisé en ce que** l'unité d'éclairage (3) présente sur sa surface lumineuse (10) au moins une piste conductrice (12), sur laquelle des sources de lumière (6) sont agencées verticalement et en rangées orientées verticalement (14) qui sont espacées les unes par rapport aux autres de sorte que par l'unité d'éclairage (3), un modèle de lumière (15) orienté verticalement en forme de bande puisse être projeté avec plusieurs rayons ou bandes de lumière (7) orientées verticalement, espacées les unes par rapport aux autres sur une zone de paroi de récipient (8), la zone de paroi de récipient (8) irradiée avec le modèle de lumière (15) en forme de bande correspondant à environ 40 % de la périphérie entière du récipient (2), laquelle zone de paroi de récipient (8) pouvant être prise par l'agencement optique (4) avec plusieurs caméras (5), les caméras (5) étant agencées en déport vertical par rapport à l'unité d'éclairage (3).

2. Système de détection selon la revendication 1, **caractérisé en ce qu'**à l'au moins une caméra (5) est associée une lentille optique (17).

3. Système de détection selon l'une quelconque des revendications précédentes, **caractérisé en ce que** l'unité d'éclairage (3) est formée d'une pluralité de conducteurs lumineux (20) agencés les uns à côté des autres, auxquels est associée respectivement une source de lumière (6) côté arrière, la surface lumineuse (10) étant réalisée dans un rayon (24).

4. Système de détection selon l'une quelconque des revendications précédentes 1, 2, **caractérisé en ce que** l'unité d'éclairage (3) est formée d'une pluralité de conducteurs lumineux (20) agencés les uns à côté des autres, auxquels est associée respectivement une source de lumière (6) côté arrière, un masque avec des ouvertures de sortie de lumière réalisées verticalement étant agencé sur la surface lumineuse (10).

5. Système de détection selon la revendication 4, **caractérisé en ce que** le masque est réalisé sous forme d'élément de panneau avec des largeurs de fente et distances de fente prescriptibles.

6. Système de détection selon l'une quelconque des revendications 3 à 5, **caractérisé en ce que** les conducteurs lumineux (20) sont réalisés comme des barres de plexiglas incolores, translucides dans la configuration comme barres carrées qui reposent avec leurs surfaces latérales (23) contiguës respectives les unes sur les autres de manière plane.

7. Utilisation d'un système de détection (1) selon l'une quelconque des revendications précédentes pour la reconnaissance de lignes de joint de récipient et/ou de gaufrages.

8. Utilisation d'un système de détection (1) selon l'une quelconque des revendications précédentes dans une machine d'étiquetage.
